Europäisches Patentamt

European Patent Office

Office européen des brevets

(11) Publication number: **0 510 676 A1**

# EUROPEAN PATENT APPLICATION

(21) Application number: **92107041.3**

(22) Date of filing: **24.04.92**

(51) Int. Cl.5: **B60K 23/08**

(30) Priority: **26.04.91 GB 9109094**

(43) Date of publication of application:
**28.10.92 Bulletin 92/44**

(84) Designated Contracting States:
**DE ES FR GB GR IT MC PT SE**

(71) Applicant: **Motor Sport Developments Ltd**
**12 Maryland Road, Tongwell**
**Milton Keynes MK15 8HF(GB)**

(72) Inventor: **Moore, Jeffrey Charles**
**Elizabeth Farm House, Ashton Road**
**Minety, Wilshire(GB)**
Inventor: **Nichol, Charles**
**7 Pyxe Court, Walton Park**
**Milton Keynes, Bucks(GB)**
Inventor: **Whitehead, David Graham**
**7 Chase Avenue, Walton Park**
**Milton Keynes, Bucks(GB)**

(74) Representative: **Marsh, Roy David et al**
**Hoffmann Eitle & Partner Patent- und**
**Rechtsanwälte Arabellastrasse 4 Postfach**
**81 04 20**
**W-8000 München 81(DE)**

(54) **Motor vehicle transmission control.**

(57) To control wheel slip in four wheel drive vehicles, the actual speed of the vehicle 10 over the ground is determined by a velocimeter 27 on board the vehicle. A transmission control apparatus 16 is controlled by logic which receives as input data from the velocimeter concerning the actual speed of the vehicle over the ground and data from rotational speed sensors 15 on each of the wheels of the vehicle. The control apparatus can be used to limit the output power of the engine to keep wheel slip within a pre-selected limit.

This invention relates to a control system for apparatus to transmit power to more than two wheels of a wheeled land vehicle.

The state of the art in four wheel drive vehicle transmission systems is summarised in a two volume monograph published in 1991 by the British Patent Office. In the final part of its introductory summary, it explains that the latest line of development is in the use of electronic control of the transmission of power to the wheels in order to achieve the inherent potential of four wheel drive.

US-A-4702337 discloses a circuit to generate a reference signal indicative of the speed of a land vehicle over the ground. The input data to the circuit is derived from the actual rotational speed of the vehicle wheels, which is of course different from the speed of the vehicle over the ground, whenever there is wheel slip.

US-A-4773500 discloses a four wheel drive system for a land vehicle, with sensors for sensing the rotational speeds of the front and rear speeds of the front and rear wheel drive shafts, and torque control means which distributes torque between the front and rear drive shafts in dependence upon the difference in the signals from the wheel speed sensors.

The present inventors have studied the previous proposals and have found them to be unable to respond to all ground conditions and demands of the driver of the vehicle sensitively enough to exploit the full potential of the vehicle. For example, there may be occasions when a rally driver could get better performance from his vehicle by inducing some controlled rear wheel slip, which the previous proposals are not adapted to provide. The present inventors have recognized that control of the system would be facilitated if the controlling logic could be provided with accurate information as to the actual speed of the vehicle over the ground. Then, the control logic could monitor continuously the magnitude of the difference between the actual speed of any particular wheel of the vehicle and the rotational speed which would be appropriate for that wheel for minimisation of wheel slip between it and the ground. Then, the control logic could be programmed to respond to measured wheel slip in whatever way was thought to be the optimum. With this in mind the inventors have considered how best to obtain the required information, and the present invention represents what they believe to be a very effective solution to this problem.

According, therefore to the present invention there is provided a control system of the type identified above, which is characterised by means to sense the speed of the vehicle relative to the ground, which speed sensor includes a velocimeter to be installed in the vehicle which transmits a signal from the vehicle to the ground, and receives a signal reflected from the ground to the vehicle.

In one preferred embodiment, the velocimeter is a Doppler velocimeter. In such an embodiment, the velocimeter would normally comprise a Doppler radar transmitter/receiver mounted on the vehicle and arranged to direct its radar beam forwardly of the vehicle, in order that the radar beam may reflect from the ground over which the vehicle is travelling, or from objects which are ground-based, whereby the reflected beam is received by the transmitter/receiver, and processed to yield its Doppler frequency shift and thereby the relative speed between the vehicle and the ground.

It is envisaged that the Doppler radar equipment would operate in a frequency band of around 23MHz.

In another preferred embodiment, an optical sensor may be used instead of a Doppler velocimeter. A beam of visible light is projected on to the ground and the reflected beam is analysed, to calculate the rate of relative movement between the sensor and the ground.

The output from the velocimeter is delivered to the control system for the power transmission apparatus.

In one example of the use of the present inventive concept, a four wheel drive, rally motor car is provided with a control system in accordance with the present invention, and the control logic is arranged so that, under those conditions where the grip of the wheels on the ground is limited, the vehicle is required to accelerate, and the engine has a surplus of power relative to the maximum available grip, the power transmission system delivers to the front pair of vehicle wheels as much power as those wheels can receive without significant wheel spin. By actuation of a front/rear torque distributor, the remainder of the power being delivered by the engine of the vehicle is fed to the rear wheels of the vehicle.

Of course, the amount of power available from the engine might be more than the rear wheels can receive without wheel spin. When a rally car is racing, however, the driver finds such rear wheel spin on many occasions to be of assistance in driving the vehicle as fast as possible around the bends of the rally course. The control logic could therefore be programmed to monitor the discrepancy between the actual speed of the rear wheels, and the speed of the vehicle over the ground, and to limit the discrepancy (that is, the rate of rear wheel spin) to a preselected amount, by restricting the power output of the engine to that which is just sufficient to achieve the desired rate of rear wheel slip.

Thus, with such a vehicle, the driver would need only to demand maximum power from the engine, to achieve full traction on the front wheels, and the preselected amount of wheel slip on the rear wheels.

The system could be provided with means to vary the preselected amount of rear wheel slip. In conditions other than racing or rallying, it may well be that the chosen amount of rear wheel slip is brought to zero.

The system is useful at speeds below 80 km/hr, but may also be useful at higher speeds, particularly when the ground is wet or icy.

Those skilled in the art will be well aware of the complexities of the interaction between the braking and power transmission systems of a four wheel drive vehicle, especially when it includes an anti-lock braking system. The proposals above are of course in relation to periods of acceleration of the vehicle, and those skilled in the art will be aware of the need to provide, in the programming of the transmission control system, for different behaviour during a braking regime.

The necessary wheel rotational speed measurement elements, torque distributors and differential gears which are required in the power transmission system contemplated herein, are either proprietary items or ones the construction of which will be a matter of routine for those skilled in the art. Of course, the particular computer software which would in practice be necessary for the control system of the present invention is software which requires original writing before the invention can ge carried into effect, but the writing of such software ought, we think, to be achievable, by those properly skilled in this art, without the need for them to resort to the exercise of the inventive faculty.

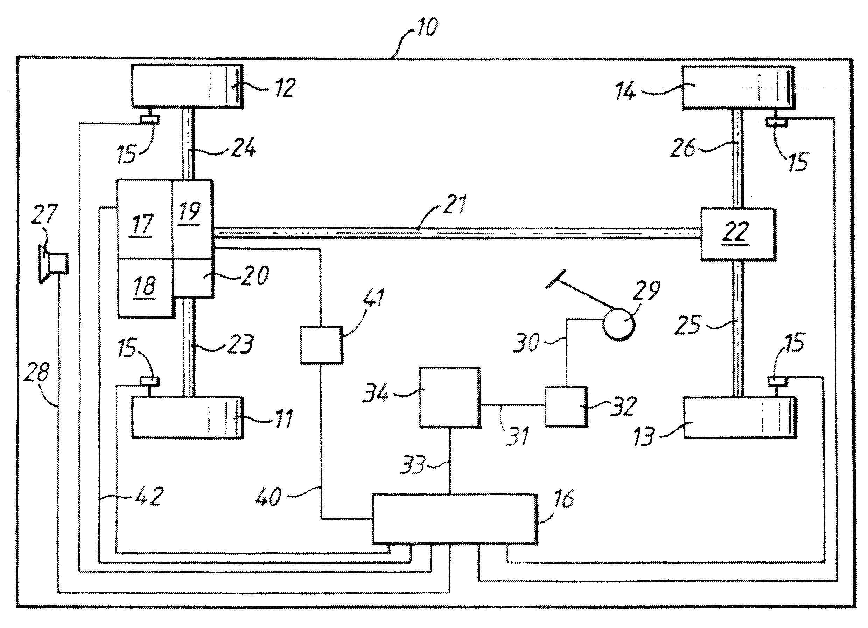

For a better understanding of the present invention, and to show more clearly how the same may be carried into effect, reference will now be made, by way of example, to the accompanying drawing, which is a schematic block diagram of the components of a power transmission system of a four wheeled vehicle, with a control system in accordance with the present invention.

In the drawing, a vehicle 10 has a front left wheel 11, front right wheel 12, rear left wheel 13 and rear right wheel 14. The rotational speed of each of these four wheels is monitored by a variable reluctance wheel speed sensor 15. An output from each of these four sensors 15 is delivered as input to a power transmission management controller 16.

The engine 17 of the vehicle delivers its power to a gearbox 18 which in turn delivers its output to a central torque distributor 19. This has two outputs, namely a first output to a front axle differential 20 and a second output 21 to a rear axle differential 22. The wheels 11-14 of the vehicle are connected to their respective differentials 20 and 22 by stub axles 23-26 respectively.

A Doppler radar transmitter/receiver 27 fitted to the front of the vehicle 10 transmits a radio frequency radar beam forwardly of the vehicle, and receives a reflected beam from the ground in front of the vehicle, enabling the speed of the vehicle 10 relative to the ground to be computed from the Doppler effect, that is, the frequency shift between the transmitted and received beams. Information about the forward speed of the vehicle relative to the ground is delivered from the speed sensor 27 via a line 28 as a further input to the control logic 16. Thus, this control logic is in a position to compute what speed the four wheels 11-14 of the vehicle ougth to be exhibiting, for zero slip between the wheels and the ground, and, from the sensors 15, what is the actual rotational speed of each of the wheels 11-14.

The throttle control 29 of the vehicle generates as output 30 a signal indicative of the throttle position, and this output 30 may be delivered as input 31 to an engine management system 34, if desired, by throwing a switch 32. The output 33 of the engine management system 34 is delivered to the transmission controller 16 which generates an output 40 delivered to an electro hydraulic torque distributor control device 41 which controls the central torque distributor 19, which distributes the output torque of the engine 17 between the front and rear wheels of the vehicle. The transmission controller 16 has a further output 42 for controlling the throttle setting of the engine 17.

The controller 16 is programmed to effect the control described above.

It is envisaged that the central torque distributor 19 might be based on an epicyclic differential, the two outputs of which are connected by a multiplate clutch, the degree of slip which can be varied under the control of the control system 16, for example, by using electrical or hydraulic means, to achieve the required distribution of torque. It is contemplated that such a torque distributor could be provided on each of the front and rear wheel pairs, in order to give torque and speed adjustment as between the wheels on the same "axle".

The variable reluctance sensors are available as proprietary items. They utilise a multi-toothed disc which is caused to rotate at the same speed as the land wheel and which passes a wire coil so that a voltage is generated within the wire coil each time a tooth of the disc moves past the sensor. The pulse rate is therefore proportional to the rotational speed of the wheel.

Summarising, in the illustrated embodiment, a four wheel drive system of a motor vehicle provides transmission power from the engine 17 through a gearbox 18 and central torque distributor 19 to front and rear axle differentials 20 and 22. Input signals from a Doppler radar device 27 are received by a system controller 16 to determine the actual ground speed. Comparison with rotational speed signals from sensors 15 enables extent of wheel slip to be established. The system controller 16 delivers output signals which adjust the clutch of the torque distributor 19 to change the ratio of torque distribution as between the front and rear axle differentials 20 and 22 respectively.

In a situation where both the front and rear wheels of the vehicle are slipping, the controller 16 can be programmed to reduce the output power of the engine 17 through its management system 34. A switch 32 in a connection between the throttle setting 29 and the controller 16 is manually operable so that the driver can decide whether or not to override the operation of the controller 16 by his own manual setting of the throttle 29.

In an alternative embodiment (not shown), the Doppler radar velocimeter 27 is replaced by an optical sensor which projects a collimated beam of light downwardly on to the ground on which the vehicle stands. The reflected beam is focussed on to an interference grating and the resultant fringes are sensed by photo-detectors. The output from the photo-detectors is filtered to separate a signal which changes with time whenever there is relative movement of the sensor and the ground. The changing signal is analysed to output a signal which indicates the speed of the vehicle over the ground. A suitable sensor is the CORREVIT LM sensor available from Datron-Masstechnik GmbH of Schwalbach, Germany.

**Claims**

1. A control system for apparatus to transmit power to more than two wheels of a wheeled land vehicle, characterised by means to sense the speed of the vehicle relative to the ground, which speed sensor includes a velocimeter to be installed in the vehicle which transmits a signal from the vehicle to the ground, and receives a signal reflected from the ground to the vehicle.

2. A system as claimed in claim 1, in which the velocimeter is a Doppler velocimeter.

3. A system as claimed in claim 2 wherein the transmitted signal has a frequency of around 23 MHz.

4. A system as claimed in claim 1 wherein the velocimeter is an optical sensor which projects a beam of light and computes a vehicle speed by analysing interference patterns created by incidence of the reflected beam on a grating.

5. A system as claimed in any one of the preceding claims including apparatus for controlling the power transmission which lies between the engine and the driven wheels of the vehicle, to distribute the power between front and rear wheel pairs of the vehicle.

6. A system as claimed in claim 5 arranged to direct to the front wheel pair as much of the power as the wheels can accept without suffering significant wheel spin.

7. A system as claimed in claim 5 or 6, including means controlled by the transmission control apparatus to constrain the output power of the engine to that which limits wheel slip to a preselected amount.

8. A system as claimed in claim 7 including means to vary the pre-selected amount of wheel slip.

EP 0 510 676 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 10, no. 181 (M-492)(2237) 25 June 1986 & JP-A-61 027 729 ( AISIN WARNER LTD. ) 7 February 1986 | 1-6 | B60K23/08 |
| Y | * figure, reference 520 * * abstract * | 7,8 | |
| Y | PATENT ABSTRACTS OF JAPAN vol. 9, no. 313 (M-437)10 December  1985 & JP-A-60 147 546 ( TOYOTA JIDOSHA KABUSHIKI KAISHA ) 3 August 1985 * abstract * | 7,8 | |
| P,X | EP-A-0 457 742 (VALMET OY) * page 4, line 40 - line 46; claims 1,9; figure * | 1,5 | |
| P,A | EP-A-0 453 931 (MAZDA MOTOR CORPORATION) * figure 2, references 15, 46 * * column 2, line 28 - line 35 * * column 6, line 40 * * column 15, line 24 - line 30; claim 1 * | 1-8 | TECHNICAL FIELDS SEARCHED (Int. Cl.5 ) |
| A | EP-A-0 335 335 (MAZDA MOTOR CORPORATION) * figure 2, references 22,26 * * column 3, line 34 - line 44; claim 1 * | 7,8 | B60K |
| A | EP-A-0 206 475 (FUJI JOKOGYO KABUSHIKI KAISHA) * figure 3a-c, reference 165 * * page 22, line 10 - line 22; claim 1 * | 7,8 | |

-----

The present search report has been drawn up for all claims

| Place of search | Date of completion of the search | Examiner |
|---|---|---|
| THE HAGUE | 13 AUGUST 1992 | BUFACCHI B.A.M. |